# EUROPEAN PATENT APPLICATION

(11) **EP 3 868 986 A1**
(43) Date of publication of application: **25.08.2021**
(21) Application number: 19855687.0
(22) Date of filing: 13.08.2019
(51) Int. Cl.: E05B 49/00, H04M 9/00

(54) **ELECTRONIC LOCK CONTROL DEVICE, ELECTRONIC LOCK CONTROL SYSTEM, ELECTRONIC LOCK CONTROL METHOD, AND PROGRAM**

(30) Priority: 30.08.2018 JP 2018161754
(71) Applicant: NEC Platforms, Ltd., Kawasaki-shi, Kanagawa 213-8511 (JP)
(72) Inventor: TAMURA, Kunihiko, Kawasaki-shi, Kanagawa 213-8511 (JP)
(74) Representative: Vossius & Partner Patentanwälte Rechtsanwälte mbB
(86) International application number: PCT/JP2019/031812
(87) International publication number: WO 2020/045075

(57) **Abstract**

The present disclosure improves security in a technology for unlocking an electronic lock using a door phone slave unit. A business phone main unit (2) includes: a PB signal reception unit (22) that receives a PB signal input through a door phone slave unit (5); an authentication information decoding unit (23) that decodes authentication information from a PB signal; and an electronic lock control unit (25) that controls an electronic lock (4) based on the decoded authentication information.

## Description

### Technical Field

The present disclosure relates to an electronic lock control apparatus, an electronic lock control system, an electronic lock control method, and a program.

### Background Art

Patent Literature 1 proposes a technology for unlocking an electronic lock by a door phone slave unit of an intercom system. Specifically, a personal identification number can be input to an electronic lock operation control unit by operating a call button of the door phone slave unit. The electronic lock operation control unit unlocks an electronic lock based on the input personal identification number.

### Citation List

### Patent Literature

Patent Literature 1: Japanese Unexamined Patent Application Publication No. H5-86756

### Summary of Invention

### Technical Problem

According to the configuration disclosed in Patent Literature 1, when the number of digits of the personal identification number is small, it is conceivable that a third party who does not know the personal identification number may successfully unlock the electronic lock by randomly operating the call button.

In view of the problem described above, an object of the present disclosure is to provide an electronic lock control apparatus, an electronic lock control system, an electronic lock control method, and a program that improve security in a technology for unlocking an electronic lock using a door phone slave unit.

### Solution to Problem

According to a first example aspect of the present disclosure, an electronic lock control apparatus includes an audible band signal reception unit configured to receive an audible band signal that is input through a door phone slave unit; an authentication information decoding unit configured to decode authentication information from the audible band signal; and an electronic lock control unit configured to control an electronic lock based on the decoded authentication information, in which the audible band signal is a PB signal.

According to a second example aspect of the present disclosure, an electronic lock control method includes receiving an audible band signal that is input through a door phone slave unit; decoding authentication information from the audible band signal; and controlling an electronic lock based on the decoded authentication information, in which the audible band signal is a PB signal.

### Advantageous Effects of Invention

According to the present disclosure, it is possible to improve security in a technology for unlocking an electronic lock using a door phone slave unit.

### Brief Description of Drawings

Fig. 1 is a schematic diagram of a main part of a business phone main unit according to a first example embodiment;
Fig. 2 is a schematic diagram of a configuration of a business phone system according to a second example embodiment;
Fig. 3 is a schematic diagram of a configuration of a smartphone;
Fig. 4 is a control flow of an electronic lock control method;
Fig. 5 is a schematic diagram of a configuration of a business phone system according to a third example embodiment;
Fig. 6 is a schematic diagram of a configuration of an intercom system according to a fourth example embodiment; and
Fig. 7 is a schematic diagram of a configuration of an intercom system according to a fifth example embodiment.

### Description of Embodiments

### (First Example Embodiment)

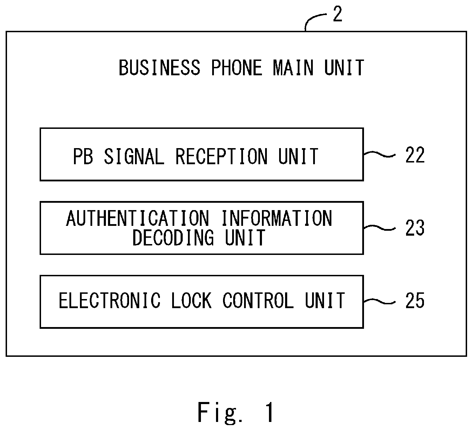

A first example embodiment will be described hereinafter with reference to Fig. 1.

As shown in Fig. 1, a business phone main unit 2 (an electronic lock control system) includes a PB signal reception unit 22 (an audible band signal reception unit) that receives a PB signal (an audible band signal) input through a door phone slave unit.

The business phone main unit 2 includes an authentication information decoding unit 23 that decodes authentication information from an audible band signal, and an electronic lock control unit 25 that controls an electronic lock based on the decoded authentication information.

According to the above configuration, it is possible to improve security in a technology for unlocking an electronic lock using a door phone slave unit.

### (Second Example Embodiment)

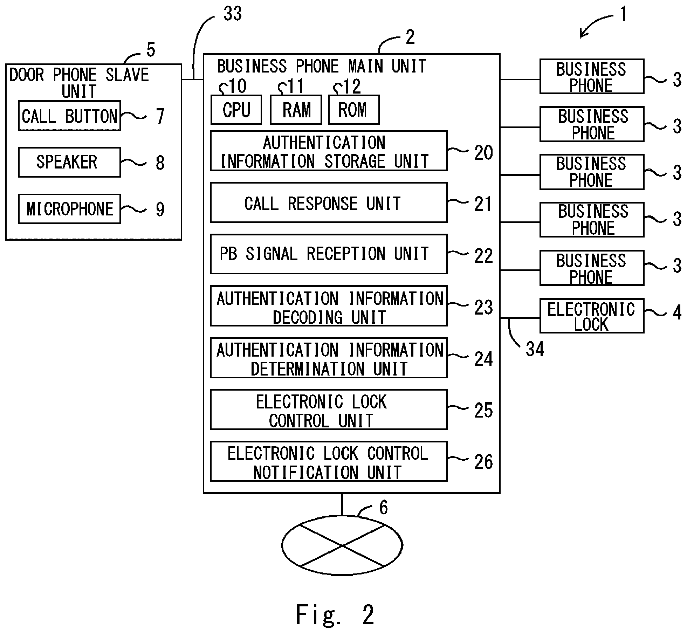

A second example embodiment will be described hereinafter with reference to Figs. 2 to 4.

As shown in Fig. 2, a business phone system 1 (an electronic lock control system) includes the business phone main unit 2 (an electronic lock control apparatus), a plurality of business phones 3, an electronic lock 4, and a door phone slave unit 5.

The business phone main unit 2 is connected to a public network 6. The business phone main unit 2 is a telephone exchange (a private branch exchange) that connects an outside line from the public network 6 to any one of the plurality of business phones 3, connects a door phone slave unit 5 to any one of the plurality of business phones 3, and connects the plurality of business phones 3 to one another. The business phone main unit 2 is also referred to as a Private Branch Exchange (PBX) when the number of connectable business phones 3 is large. Details of the business phone main unit 2 will be described later.

The plurality of business phones 3 are connected to the business phone main unit 2.

The electronic lock 4 is connected to the business phone main unit 2 through a cable 34. The electronic lock 4 is provided at an entrance of a building, an entrance shared by a plurality of buildings, an entrance of a site, and other entrances, and is a lock for locking and unlocking the entrance. The electronic lock 4 described below is provided at the entrance of a building. The electronic lock 4 includes, for example, a solenoid coil, and the business phone main unit 2 can remotely control locking and unlocking of the electronic lock 4. The electronic lock 4 may be wirelessly connected to the business phone main unit 2.

The door phone slave unit 5 is connected to the business phone main unit 2 through a cable 33. The door phone slave machine 5 is disposed near the entrance where the electronic lock 4 is locked. The door phone slave unit 5 is disposed near the electronic lock 4. The door phone slave unit 5 is disposed so as to correspond to the electronic lock 4. The door phone slave unit 5 is a unit mainly for enabling a visitor to a building to inform, from the outside of an entrance of the building, an employee in the building of his/her arrival and for enabling the visitor to the building to talk with the employee in the building from the outside of the entrance thereof. The door phone slave unit 5 includes a call button 7, a speaker 8, and a microphone 9. When the visitor arrives at the entrance, he/she presses the call button 7, whereby it is possible for the visitor to inform the employee in the building of his/her arrival. Further, the visitor can also communicate with the employee in the building by using the speaker 8 and the microphone 9. The speaker 8 and the microphone 9 may be composed of one speaker. The door phone slave unit 5 may be wirelessly connected to the business phone main unit 2.

Next, the business phone main unit 2 will be described in detail. The business phone main unit 2 includes a CPU (Central Processing Unit) 10 that serves as a central processing unit, a readable/writable RAM (Random Access Memory) 11, and a read-only ROM (Read Only Memory) 12. Further, the CPU 10 loads and executes a program stored in the ROM 12, whereby the program causes hardware such as the CPU 10 to function as an authentication information storage unit 20. Further, the program also causes hardware such as the CPU 10 to function as a call response unit 21, the PB signal reception unit 22, the authentication information decoding unit 23, an authentication information determination unit 24, the electronic lock control unit 25, and an electronic lock control notification unit 26.

The authentication information storage unit 20 stores authentication information. The authentication information is a number string consisting of a plurality of numbers. The authentication information stored in the authentication information storage unit 20 is hereinafter referred to as "registered authentication information".

The call response unit 21 performs predetermined call response processing in response to the pressing of the call button 7 of the door phone slave unit 5. Examples of the predetermined call response processing include outputting a specific voice message to the speaker 8 of the door phone slave unit 5.

The PB signal reception unit 22 receives a PB signal input through the microphone 9 of the door phone slave unit 5. The PB signal (the Push Button Dial Signal) is a specific example of a voice band signal. The voice band signal is, for example, a signal having a frequency of between 300 Hz and 3400 Hz. The voice band signal is a specific example of an audible band signal. The audible band signal is, for example, a signal having a frequency of between 2 Hz and 20000 Hz.

The authentication information decoding unit 23 decodes authentication information from the PB signal received by the PB signal reception unit 22.

The authentication information determination unit 24 determines whether the decoded authentication information matches the registered authentication information.

The electronic lock control unit 25 controls the electronic lock 4 based on the decoded authentication information. Specifically, the electronic lock control unit 25 unlocks the electronic lock 4 when the authentication information determination unit 24 determines that the decoded authentication information matches the registered authentication information as a result of the above determination. On the other hand, the electronic lock control unit 25 does not unlock the electronic lock 4 when the authentication information determination unit 24 determines that the above information pieces do not match each other.

The electronic lock control notification unit 26 notifies the visitor through the speaker 8 of the door phone slave unit 5 that the electronic lock control unit 25 has unlocked the electronic lock 4 or that the electronic lock control unit 25 has not unlocked the electronic lock 4.

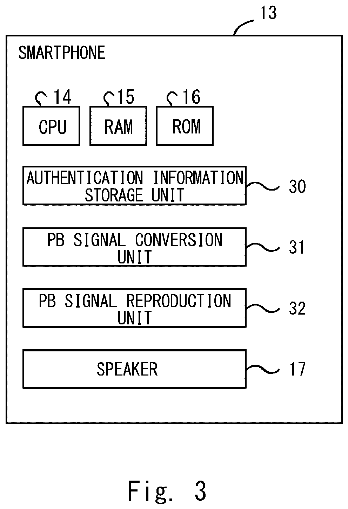

Further, when the employee enters the building, he/she may input the registered authentication information to the business phone main unit 2 as a PB signal through the microphone 9 of the door phone slave unit 5. At this time, the employee can use, for example, a smartphone 13 shown in Fig. 3.

The smartphone 13 includes a CPU 14 that serves as a central processing unit, a readable/writable RAM 15, a read-only ROM 16, and a speaker 17. Further, the CPU 14 loads and executes a program stored in the ROM 16, whereby the program causes hardware such as the CPU 14 to function as an authentication information storage unit 30, a PB signal conversion unit 31, and a PB signal reproduction unit 32.

The authentication information storage unit 30 stores the registered authentication information.

The PB signal conversion unit 31 converts the registered authentication information stored in the authentication information storage unit 30 into a PB signal.

The PB signal reproduction unit 32 reproduces the PB signal converted by the PB signal conversion unit 31 from the speaker 17.

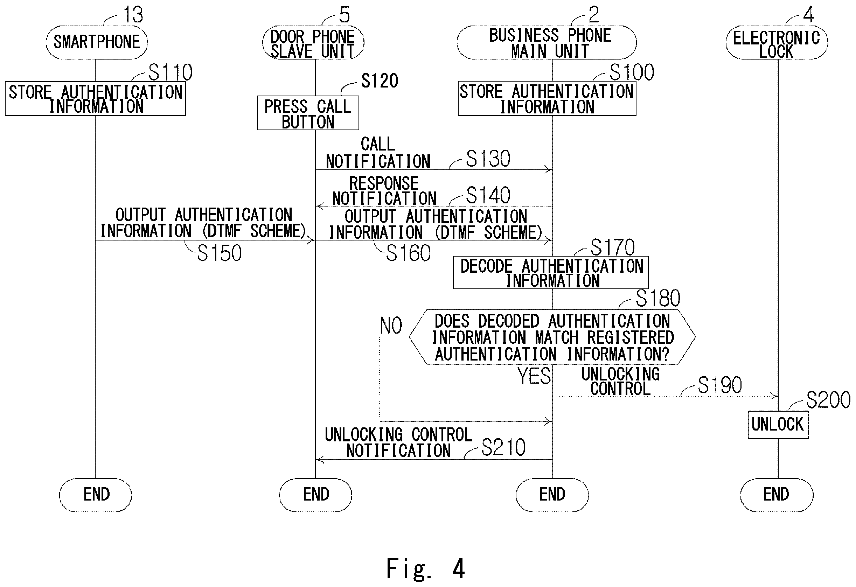

Next, a control flow of the electronic lock control method will be described with reference to Fig. 4.
S100:
   First, an administrator of the business phone main unit 2 stores authentication information in the authentication information storage unit 30.
S110:
   Further, an employee stores the authentication information provided by the administrator of the business phone main unit 2 in the authentication information storage unit 30 of his/her own smartphone 13.
S120:
   When the employee unlocks the electronic lock 4 and enters a building from an entrance thereof, he/she first presses the call button 7 of the door phone slave unit 5.
S130:
   Then, a call notification is output from the door phone slave unit 5 to the business phone main unit 2.
S140:
   When the call response unit 21 of the business phone main unit 2 receives the call notification input from the door phone slave unit 5, it outputs a response notification to the speaker 8 of the door phone slave unit 5. The response notification is, for example, a voice message "enter your authentication information".
S150:
   After the above voice message is played, the employee operates the smartphone 13, to thereby output the authentication information stored in the authentication information storage unit 30 from the speaker 17 to the microphone 9 of the door phone slave unit 5 in a DTMF (Dual-Tone Multi-Frequency) scheme, that is, as a PB signal.
S160:
   The PB signal output from the smartphone 13 is superimposed on the cable 33 (see Fig. 2), is input to the business phone main unit 2, and is received by the PB signal reception unit 22.
S170:
   Next, the authentication information decoding unit 23 decodes the authentication information from the PB signal received by the PB signal reception unit 22.
S180:
   Next, the authentication information determination unit 24 determines whether the decoded authentication information matches the registered authentication information.
S190-S200:
   Next, when a result of the determination performed in S180 is true, the electronic lock control unit 25 unlocks the electronic lock 4. On the other hand, when the result of the determination performed in S180 is false, the electronic lock control unit 25 does not unlock the electronic lock 4.
S210:
   Next, when the electronic lock control unit 25 unlocks the electronic lock 4, the electronic lock control notification unit 26 outputs a voice message "successfully unlocked" to the speaker 8 of the door phone slave unit 5. On the other hand, when the electronic lock control unit 25 does not unlock the electronic lock 4, the electronic lock control notification unit 26 outputs a voice message "authentication failed" to the speaker 8 of the door phone slave unit 5.

Then, when the electronic lock 4 is successfully unlocked, the employee enters the building through the entrance. After that, the electronic lock 4 is automatically locked after a lapse of a predetermined period of time.

As described above, by the configuration in which the electronic lock 4 is unlocked by inputting authentication information to the business phone main unit 2 as a PB signal through the door phone slave unit 5, security is remarkably improved as compared to a configuration in which the call button 7 of the door phone slave unit 5 is simply tapped a plurality of times to input authentication information.

The second example embodiment of the present disclosure described above has the following features.

As shown in Fig. 2, the business phone main unit 2 (the electronic lock control apparatus) includes the PB signal reception unit 22 (the audible band signal reception unit) that receives a PB signal (an audible band signal) input through the door phone slave unit 5, the authentication information decoding unit 23 that decodes authentication information from the PB signal, and the electronic lock control unit 25 that controls the electronic lock 4 based on the decoded authentication information. According to the above configuration, it is possible to improve security in a technology for unlocking the electronic lock 4 using the door phone slave unit 5.

Note that in the above example embodiment, the PB signal reception unit 22, the authentication information decoding unit 23, and the electronic lock control unit 25 are implemented by the business phone main unit 2 alone, but instead of this configuration, these units may be implemented by a plurality of apparatuses performing distributed processing.

Further, the business phone main unit 2 may be disposed in a building having an entrance in which the electronic lock 4 is provided or may be disposed in another building.

The PB signal is a specific example of a voice band signal. The voice band signal is a specific example of an audible band signal. The audible band signal may be, for example, an employee's utterance itself or a melody, instead of the PB signal.

Further, the business phone main unit 2 further includes the authentication information storage unit 20 that stores authentication information. When the decoded authentication information matches the authentication information stored in the authentication information storage unit 20, the electronic lock control unit 25 unlocks the electronic lock 4. According to the above configuration, it is possible to reliably perform authentication determination. However, the electronic lock control unit 25 may learn authentication determination for each audible band signal by machine learning and execute the authentication determination based on a result of the learning. In this case, the business phone main unit 2 does not need to include the authentication information storage unit 20.

Note that the electronic lock 4 is disposed so as to correspond to the door phone slave unit 5.

Further, the electronic lock control method includes receiving a PB signal input through the door phone slave unit 5 (S160), decoding authentication information from the PB signal (S170), and controlling the electronic lock 4 based on the decoded authentication information (S180 to S200). According to the above method, it is possible to improve security in a technology for unlocking the electronic lock 4 using the door phone slave unit 5.

Note that in the above example embodiment, the authentication information has been described as being a number string consisting of a plurality of numbers. However, the authentication information may be a character string consisting of a plurality of characters. Further, the authentication information may be a combination of at least one character and at least one number. Further, the authentication information may be a combination of at least one character or number and at least one symbol.

Further, in the above example embodiment, when authentication information is input through the microphone 9 of the door phone slave unit 5, a PB dialer may be used instead of the smartphone 13. Further, a PB signal corresponding to authentication information may be recorded in advance in the smartphone 13 or a hand-held recorder, and the recorded PB signal may be reproduced, to thereby input authentication information through the microphone 9 of the door phone slave unit 5.

By using a PB signal in this manner, it can be expected that authentication information will be accurately input to the business phone main unit 2, and even if the number of digits of the authentication information is increased, the accuracy of the input is not affected. Thus, the number of digits of the authentication information can be increased to, for example, about 20 digits to further enhance security.

### (Third Example Embodiment)

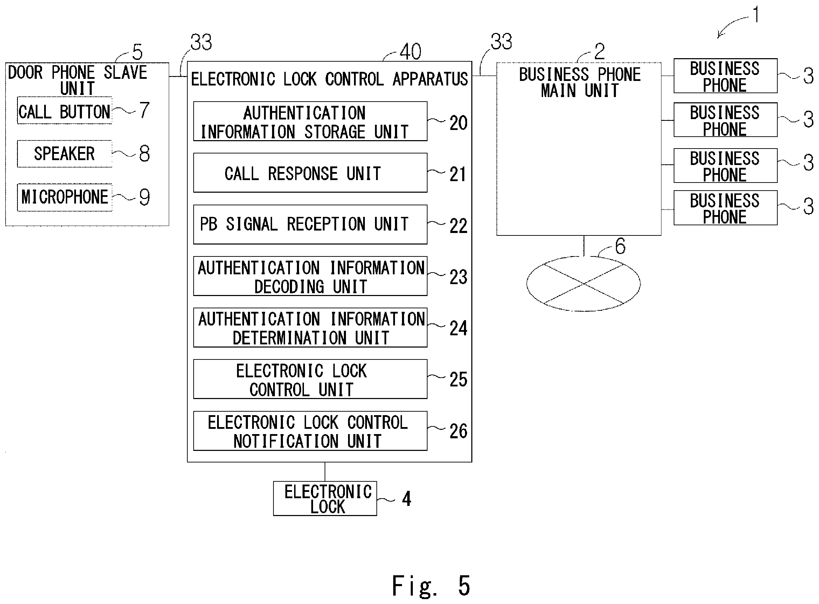

Next, a third example embodiment will be described with reference to Fig. 5. This example embodiment will be described hereinafter with a focus on differences between it and the second example embodiment, and redundant descriptions will be omitted.

In this example embodiment, an electronic lock control apparatus 40 is provided on the cable 33 that serves as a speech path connecting the business phone main unit 2 to the door phone slave unit 5. The electronic lock 4 is connected to the electronic lock control apparatus 40. Instead of the business phone main unit 2, the electronic lock control apparatus 40 includes the authentication information storage unit 20, the call response unit 21, the PB signal reception unit 22, the authentication information decoding unit 23, the authentication information determination unit 24, the electronic lock control unit 25, and the electronic lock control notification unit 26.

That is, the electronic lock control apparatus 40 includes the PB signal reception unit 22 (the audible band signal reception unit) that receives a PB signal (an audible band signal) input through the door phone slave unit 5, the authentication information decoding unit 23 that decodes authentication information from the PB signal, and the electronic lock control unit 25 that controls the electronic lock 4 based on the decoded authentication information. According to the above configuration, it is possible to improve security in a technology for unlocking the electronic lock 4 using the door phone slave unit 5.

Further, the business phone system 1 (the electronic lock control system) includes the door phone slave unit 5, the electronic lock control apparatus 40, and the business phone main unit 2 (the private branch exchange). The electronic lock control apparatus 40 is provided on the cable 33 (the speech path) between the door phone slave unit 5 and the business phone main unit 2.

### (Fourth Example Embodiment)

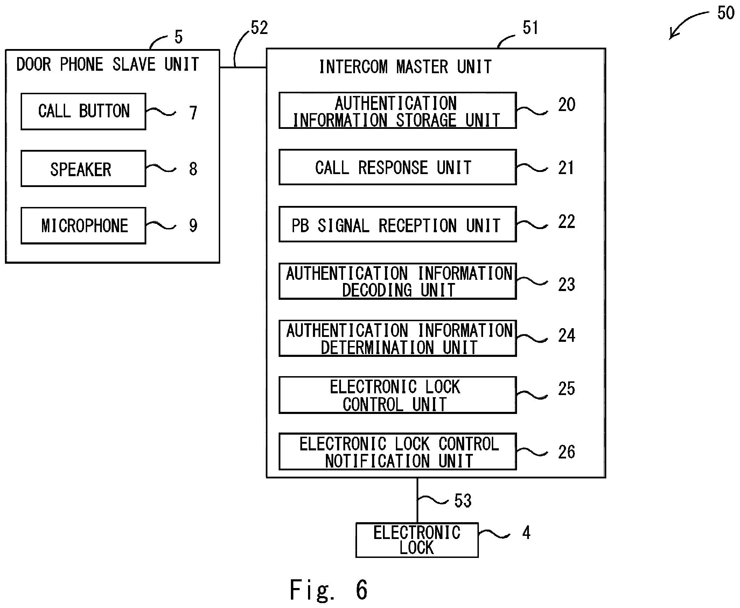

Next, a fourth example embodiment will be described with reference to Fig. 6. This example embodiment will be described hereinafter with a focus on differences between it and the second example embodiment, and redundant descriptions will be omitted.

Fig. 6 shows an intercom system 50 (an electronic lock control system). The intercom system 50 includes the door phone slave unit 5, an intercom master unit 51, and the electronic lock 4.

The intercom master unit 51 includes a CPU (not shown) that serves as a central processing unit, a readable/writable RAM (not shown), and a read-only ROM (not shown). Further, the CPU loads and executes a program stored in the ROM, whereby the program causes hardware such as the CPU to function as the authentication information storage unit 20. Further, the program also causes hardware such as the CPU to function as the call response unit 21, the PB signal reception unit 22, the authentication information decoding unit 23, the authentication information determination unit 24, the electronic lock control unit 25, and the electronic lock control notification unit 26. The functions of the authentication information storage unit 20, the call response unit 21, and the like are the same as those in the second example embodiment.

The door phone slave unit 5 is connected to the intercom master unit 51 via a cable 52.

The electronic lock 4 is connected to the intercom system 50 via a cable 53.

By the above configuration, it is possible to improve security in a technology for unlocking the electronic lock 4 using the door phone slave unit 5.

### (Fifth Example Embodiment)

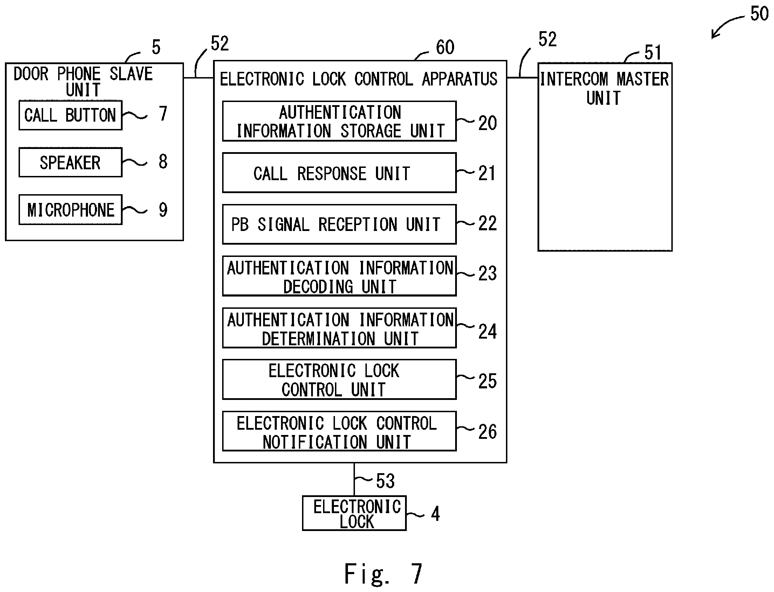

Next, a fifth example embodiment will be described with reference to Fig. 7. This example embodiment will be described hereinafter with a focus on differences between it and the fourth example embodiment, and redundant descriptions will be omitted.

In this example embodiment, an electronic lock control apparatus 60 is provided on the cable 52 that serves as a speech path connecting the intercom master unit 51 and the door phone slave unit 5. The electronic lock 4 is connected to the electronic lock control apparatus 60. Instead of the intercom master unit 51, the electronic lock control apparatus 60 includes the authentication information storage unit 20, the call response unit 21, the PB signal reception unit 22, the authentication information decoding unit 23, the authentication information determination unit 24, the electronic lock control unit 25, and the electronic lock control notification unit 26.

That is, the electronic lock control apparatus 60 includes the PB signal reception unit 22 (the audible band signal reception unit) that receives a PB signal (an audible band signal) input through the door phone slave unit 5, the authentication information decoding unit 23 that decodes authentication information from the PB signal, and the electronic lock control unit 25 that controls the electronic lock 4 based on the decoded authentication information. According to the above configuration, it is possible to improve security in a technology for unlocking the electronic lock 4 using the door phone slave unit 5.

Further, the intercom system 50 (the electronic lock control system) includes the door phone slave unit 5, the electronic lock control apparatus 60, and the intercom master unit 51. The electronic lock control apparatus 60 is provided on the cable 52 (the speech path) between the door phone slave unit 5 and the intercom master unit 51.

In the above-described examples, the program(s) can be stored and provided to a computer using any type of non-transitory computer readable media. Non-transitory computer readable media include any type of tangible storage media. Examples of non-transitory computer readable media include magnetic storage media (e.g., flexible disks, magnetic tapes, and hard disk drives), optical magnetic storage media (e.g., magneto-optical disks). Examples of non-transitory computer readable media include Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). Further, the program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The present disclosure is not limited to the above-described example embodiments and can be modified as appropriate without departing from the spirit of the present disclosure.

The whole or part of the example embodiments disclosed above can be described as, but not limited to, the following supplementary notes.

### (Supplementary note 1)

An electronic lock control apparatus comprising:
an audible band signal reception unit configured to receive an audible band signal that is input through a door phone slave unit;
an authentication information decoding unit configured to decode authentication information from the audible band signal; and
an electronic lock control unit configured to control an electronic lock based on the decoded authentication information.

### (Supplementary note 2)

The electronic lock control apparatus described in Supplementary note 1, wherein the audible band signal is a voice band signal.

### (Supplementary note 3)

The electronic lock control apparatus described in Supplementary note 2, wherein the voice band signal is a PB signal.

### (Supplementary note 4)

The electronic lock control apparatus described in any one of Supplementary notes 1 to 3, further comprising an authentication information storage unit configured to store authentication information,
wherein when the decoded authentication information matches the authentication information stored in the authentication information storage unit, the electronic lock control unit unlocks the electronic lock.

### (Supplementary note 5)

The electronic lock control apparatus described in any one of Supplementary notes 1 to 4, wherein the electronic lock is disposed so as to correspond to the door phone slave unit.

### (Supplementary note 6)

An electronic lock control system comprising:
the door phone slave unit;
the electronic lock control apparatus according to any one of Supplementary notes 1 to 5; and
a private branch exchange or an intercom master unit,
wherein the electronic lock control apparatus is provided on a speech path between the door phone slave unit and the private branch exchange, or on a speech path between the door phone slave unit and the intercom master unit.

### (Supplementary note 7)

The electronic lock control method comprising:
receiving an audible band signal that is input through a door phone slave unit;
decoding authentication information from the audible band signal; and
controlling an electronic lock based on the decoded authentication information.

### (Supplementary note 8)

The electronic lock control method described in Supplementary note 7, wherein the audible band signal is a voice band signal.

### (Supplementary note 9)

The electronic lock control method described in Supplementary note 8, wherein the voice band signal is a PB signal.

### (Supplementary note 10)

The electronic lock control method described in any one of Supplementary notes 7 to 9, further comprising storing authentication information,
wherein in the control of the electronic lock based on the decoded authentication information, when the decoded authentication information matches the stored authentication information, the electronic lock is unlocked.

### (Supplementary note 11)

The electronic lock control method described in any one of Supplementary notes 7 to 10, wherein the electronic lock is disposed so as to correspond to the door phone slave unit.

### (Supplementary note 12)

A program for causing a computer to perform the electronic lock control method described in any one of Supplementary notes 7 to 11.

This application is based upon and claims the benefit of priority from Japanese patent application No. 2018-161754, filed on August 30, 2018, the disclosure of which is incorporated herein in its entirety by reference.

### Reference Signs List

- 1: BUSINESS PHONE SYSTEM
- 2: BUSINESS PHONE MAIN UNIT
- 3: BUSINESS PHONE
- 4: ELECTRONIC LOCK
- 5: DOOR PHONE SLAVE UNIT
- 6: PUBLIC NETWORK
- 7: CALL BUTTON
- 8: SPEAKER
- 9: MICROPHONE
- 13: SMARTPHONE
- 17: SPEAKER
- 20: AUTHENTICATION INFORMATION STORAGE UNIT
- 21: CALL RESPONSE UNIT
- 22: PB SIGNAL RECEPTION UNIT
- 23: AUTHENTICATION INFORMATION DECODING UNIT
- 24: AUTHENTICATION INFORMATION DETERMINATION UNIT
- 25: ELECTRONIC LOCK CONTROL UNIT
- 26: ELECTRONIC LOCK CONTROL NOTIFICATION UNIT
- 30: AUTHENTICATION INFORMATION STORAGE UNIT
- 31: PB SIGNAL CONVERSION UNIT
- 32: PB SIGNAL REPRODUCTION UNIT
- 33: CABLE
- 40: ELECTRONIC LOCK CONTROL APPARATUS
- 50: INTERCOM SYSTEM
- 51: INTERCOM MASTER UNIT
- 52: CABLE
- 53: CABLE
- 60: ELECTRONIC LOCK CONTROL APPARATUS

## Claims

1. An electronic lock control apparatus comprising:
an audible band signal reception unit configured to receive an audible band signal that is input through a door phone slave unit;
an authentication information decoding unit configured to decode authentication information from the audible band signal; and
an electronic lock control unit configured to control an electronic lock based on the decoded authentication information,
wherein the audible band signal is a PB signal.

2. The electronic lock control apparatus according to Claim 1, further comprising an authentication information storage unit configured to store authentication information,
wherein when the decoded authentication information matches the authentication information stored in the authentication information storage unit, the electronic lock control unit unlocks the electronic lock.

3. The electronic lock control apparatus according to Claim 1 or 2, wherein the electronic lock is disposed so as to correspond to the door phone slave unit.

4. An electronic lock control system comprising:
the door phone slave unit;
the electronic lock control apparatus according to any one of Claims 1 to 3; and
a private branch exchange or an intercom master unit,
wherein the electronic lock control apparatus is provided on a speech path between the door phone slave unit and the private branch exchange, or on a speech path between the door phone slave unit and the intercom master unit.

5. The electronic lock control method comprising:
receiving an audible band signal that is input through a door phone slave unit;
decoding authentication information from the audible band signal; and
controlling an electronic lock based on the decoded authentication information,
wherein the audible band signal is a PB signal.

6. The electronic lock control method according to Claim 5, further comprising storing authentication information,
wherein in the control of the electronic lock based on the decoded authentication information, when the decoded authentication information matches the stored authentication information, the electronic lock is unlocked.

7. The electronic lock control method according to Claim 5 or 6, wherein the electronic lock is disposed so as to correspond to the door phone slave unit.

8. A program for causing a computer to perform the electronic lock control method according to any one of Claims 5 to 7.
